# EUROPEAN PATENT SPECIFICATION

(11) **EP 2 425 748 B1**
(45) Date of publication and mention of the grant of the patent: **08.01.2014**
(21) Application number: 10425285.3
(22) Date of filing: 03.09.2010
(51) Int. Cl.: A47B 96/14, F16B 7/04, F16B 7/18, F16B 12/40

(54) **Modular kit for customized manufacture of carts, workstations, storage units and similar structures**
Modulares Kit zur maßgeschneiderten Herstellung von Wagen, Arbeitsplätzen, Lagereinheiten und ähnlichen Strukturen
Kit modulaire pour la fabrication personnalisée de chariots, stations de travail, unités de stockage et structures similaires

(43) Date of publication of application: 07.03.2012
(73) Proprietor: Easysae S.r.l., 40139 Bologna (IT)
(72) Inventor: Baldazzi, Claudio, 40055 Castenaso (Prov. of Bologna) (IT)

(56) References cited:
- WO-A1-03/035996
- DE-A1- 19 855 928
- DE-U1- 29 706 396
- US-A- 4 941 763

## Description

The present invention relates to a modular kit for customized manufacture of carts, workstations, storage units and similar structures.

As is known, in the industrial field, there is an increasingly felt need to customize and manufacture to order various structures, such as carts, storage units (of the gravity type, of the type known as "supermarket", etcetera) and workstations of various types.

More precisely, this requirement has become a sort of necessity for the many firms that have chosen, among others for their production/logistics departments, to follow the organizational principles commonly termed "lean thinking".

These principles are aimed at reducing all activities and costs that affect operators and workers assigned to production or storage, for example, without generating added value for the customer, but are typically seen by the operators themselves (and even more by their managers) as necessary and inevitable.

Among these activities, an important role is played by useless movements and displacements of operators, caused by workstations and/or storage units designed in a scarcely practical and functional way, and without considering the needs to optimize day-to-day work that are instead considered fundamental in the field of "lean thinking".

In this regard, and in order to allow swift and easy redesign of workplaces in these work departments, several firms offer modular kits for providing workstations and/or gravity storage units, for example, on the market, by means of which it is possible to build substantially many types of desks, racks, shelves, supporting and auxiliary structures in general, on the basis of the specific requirements highlighted with a preliminary analysis of the work steps and/or of the dimensions and expected minimum reserves of products.

More specifically, these kits comprise various types of bars and profiles, which can be mutually coupled according to several mutual configurations, thanks to the use of various connectors (also included in the kits), which indeed make it possible to mutually anchor the bars to each other in the chosen arrangement in order to obtain a workstation, or a storage unit, that allows the operator to work in optimal conditions, as highlighted above.

Examples of bar connectors are available, for example, from documents DE 19855928, US 4941763 and DE 29706396 U1.

The aim of the present invention is to solve the problems described above, by providing a modular kit that makes it possible to easily provide a plurality of carts, workstations, storage units and the like, in a customized manner.

Within this aim, an object of the invention is to provide a modular kit that allows in a practical and easy manner the provision in a customized manner of carts, workstations, storage units and similar structures.

Another object of the invention is to provide a modular kit that makes it possible to provide a plurality of different types of structure by using a minimal number of different connecting elements.

Another object of the invention is to provide a modular kit that allows the provision of structures such as carts, storage units and workstations that have high stability and rigidity without the risk of oscillations or bending of the bars that compose them.

Another object of the invention is to provide a modular kit that is highly reliable in use.

Another object of the invention is to provide a modular kit that can be obtained easily starting from commonly commercially available elements and materials.

Another object of the invention is to provide a modular kit that has low costs and is safe in application.

This aim and these and other objects which will become better apparent hereinafter are achieved by a modular kit according to the present invention, that has the features set forth in claim 1.

Further characteristics and advantages of the invention will become better apparent from the detailed description that follows of some preferred but not exclusive embodiments of the modular kit according to the invention, illustrated by way of non-limiting example in the accompanying drawings, wherein:
Figure 1 is a perspective view of a bar comprised in the kit according to the invention;
Figure 2 is a side elevation view of the bar of Figure 1;
Figure 3 is a perspective view of the connector comprised in the kit according to the invention, in a first embodiment;
Figure 4 is a side elevation view of the connector of Figure 3;
Figure 5 is a sectional view, taken along a longitudinal plane, of the connector of Figure 3;
Figure 6 is a perspective view of the connector, comprised in the kit according to the invention, in a second embodiment;
Figure 7 is a top view of the connector of Figure 6;
Figure 8 is a side elevation view of the connector of Figure 6;
Figure 9 is a sectional view, taken along a longitudinal plane, of the connector of Figure 6;
Figure 10 is a sectional view, taken along a longitudinal plane, of a first additional element comprised in the kit according to the invention;
Figure 11 is a top view of the first additional element of Figure 10;
Figures 12 and 13 are schematic side elevation views of the use of a second additional element comprised in the kit according to the invention;
Figure 14 is a perspective view of a third additional element and a fourth additional element, in a first embodiment, comprised in the kit according to the invention;
Figure 15 is a side elevation view of the fourth additional element of Figure 14;
Figure 16 is a sectional view, taken along a plane at right angles to the longitudinal axis, of the fourth additional element of Figure 14, in a different embodiment, comprised in the kit according to the invention;
Figure 17 is a sectional view, taken along a plane at right angles to the longitudinal axis, of the application of the fourth additional element of Figure 16 on the bar of Figure 1;
Figure 18 is a side elevation view of a first possible use of the kit according to the invention;
Figure 19 is a top view of the use of the kit according the invention of Figure 18;
Figure 20 is a side elevation view of a second possible use of the kit according to the invention;
Figure 21 is a top view of a third possible use of the kit according to the invention.

With reference to the figures, a modular kit according to the invention, generally designated by the reference numeral 1, allows, according to the methods that will be illustrated hereinafter and by means of the combination of the elements comprised therein, the customized provision of carts, workstations, storage units and similar structures. Reference shall be made, therefore, to these structures in the continuation of the present description, but in any case the possibility is not excluded (and is within the protective scope claimed herein) of using the modular kit 1 according to the invention in order to provide different objects and apparatuses, according to the specific requirements and thanks to the versatility of the elements of the kit 1.

The kit 1 comprises at least one profiled bar 2A, 2B, with a variable length chosen at will, and at least one connector 3a, 3b, which is provided with respective jaws 4 to clamp the bar 2A, 2B at any point of its axial extension.

According to the invention, the bar 2A, 2B has at least eight contoured longitudinal crests 5, which are substantially arranged at uniform distances from each other along the lateral surface of the bar 2A, 2B: the crests 5 (with each one of their sides) can thus constitute abutment shoulders for the jaws 4, whose shape is complementary to the crests 5, so as to allow the connector 3a, 3b to clamp the bar 2A, 2B along at least eight respective different radial directions.

More precisely, according to the preferred embodiment proposed in the figures, which are provided merely by way of non-limiting example of the application of the invention, the bar 2A, 2B has indeed eight longitudinal crests 5, substantially arranged at uniform distances from each other along its lateral surface: the sides of each pair that is constituted by two consecutive crests 5 can thus constitute abutment shoulders for the clamping of the bar 2A, 2B by the connector 3a, 3b, indeed along eight respective different radial directions (each staggered with respect to the next by 45°).

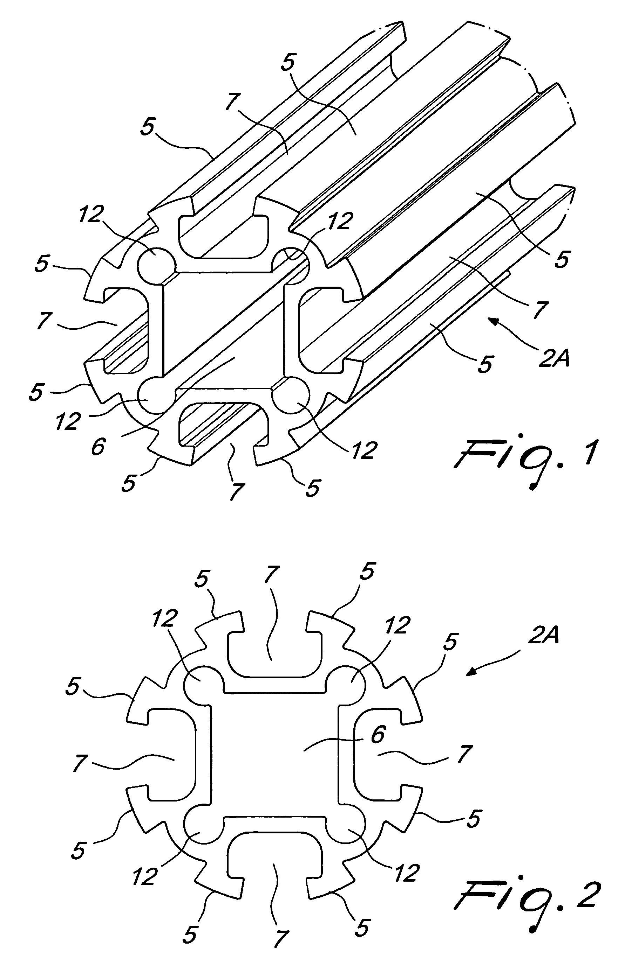

Moreover, according to the invention, the bar 2A, 2B comprised in the kit 1 has a hollow duct 6, which is arranged coaxially inside it and has a preferably square cross-section and at least four longitudinal slots 7, arranged at uniform distances from each other along its lateral surface (as can be seen in particular in Figure 2) and delimited by respective pairs of crests 5. Each slot 7, which is preferably provided with a flat bottom, forms a seat for coupling with shelves, panels, accessories and tools of various types to be anchored to the bar 2A, 2B. For example, it is possible to insert in the slot 7 a locking nut (of various sizes), in which it is possible to insert inserts and/or threaded locking elements, which thus make it possible to anchor the shelves or other accessories and tools to the bar 2A, 2B (along four different radial directions, which correspond to the four slots 7 provided along the bar 2A, 2B).

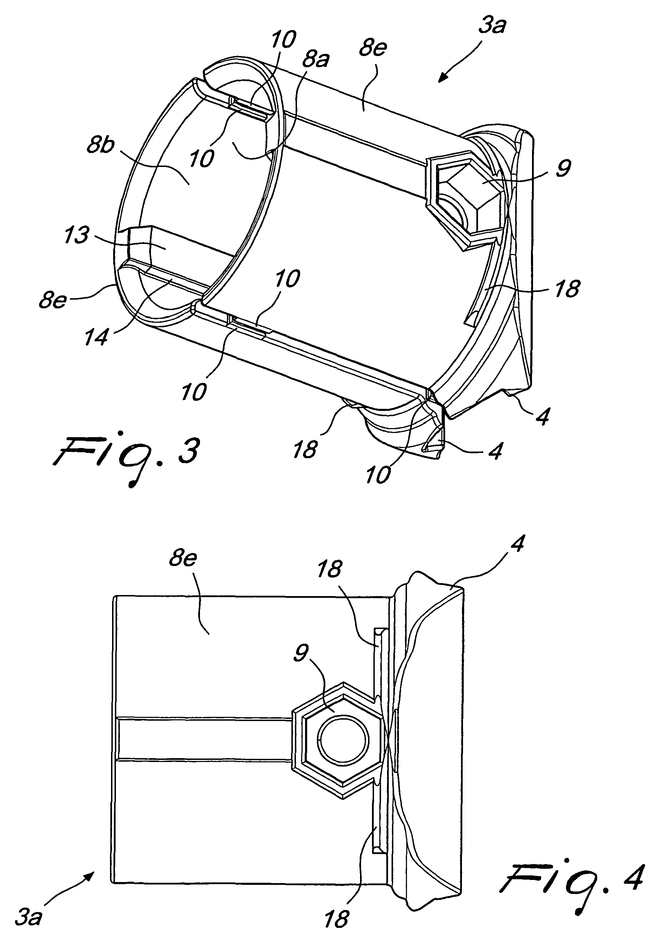

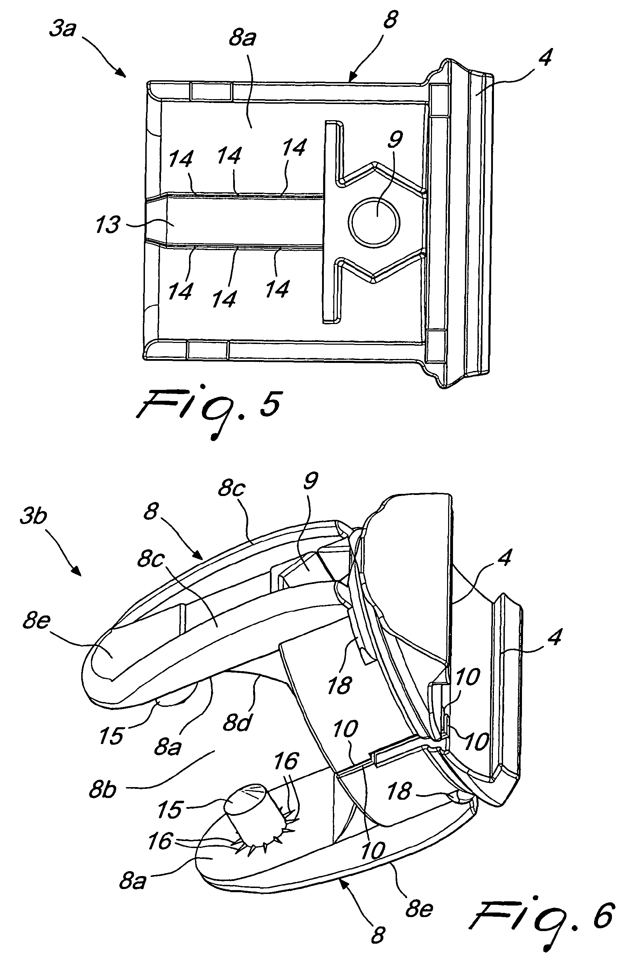

Usefully, according to the preferred but not exclusive embodiment, the connector 3a, 3b is substantially constituted by two mutually facing shells 8: in this configuration, illustrated for example in Figures 3 and 6, the two shells 8 delimit, with the respective inner walls 8a, a seat 8b for accommodating an end portion of a first bar 2A, which is clamped by the two shells 8 to provide the coupling. Moreover, each shell 8 has an end portion whose shape is complementary to the sides of the crests 5, thus forming a respective jaw 4, to clamp the second bar 2B. It is specified, therefore, that in the continuation of the present description (as well as in the accompanying figures) the first bar (designed to be fastened by the shells 8 at its end portion) shall be designated by 2A, whereas the second bar, designed to be clamped by the jaws 4 at its crests 5 while the first bar 2A is fastened by the shells 8, shall be designated by 2B.

Thanks to the presence of the eight crests 5, as already noted, it is thus possible to mutually couple the first bar 2A and the second bar 2B, by means of the connector 3a, 3b, along eight different radial directions.

More particularly, in order to provide the mutual coupling between the first bar 2A and the second bar 2B, each shell 8 has a recess 9 in which is possible to insert a respective locking nut, which in turn is adapted to receive a corresponding fixing screw.

In order to thus lock the two shells 8 around the first bar 2A, and clamp correspondingly the second bar 2B with the jaws 4, it is sufficient to screw the fastening screw inside the locking nut, arranged in the recess 9.

Usefully, for compensating any excessive locking force applied by the user during the assembly of the structure to be provided, the kit 1 comprises pads 10 (which are substantially shaped like parallelepipeds) that protrude from the lateral edges of the shells 8: any excessive locking force can thus be discharged onto the pads 10, preventing an unwanted deformation of the bars 2A, 2B (or at least reducing its extent).

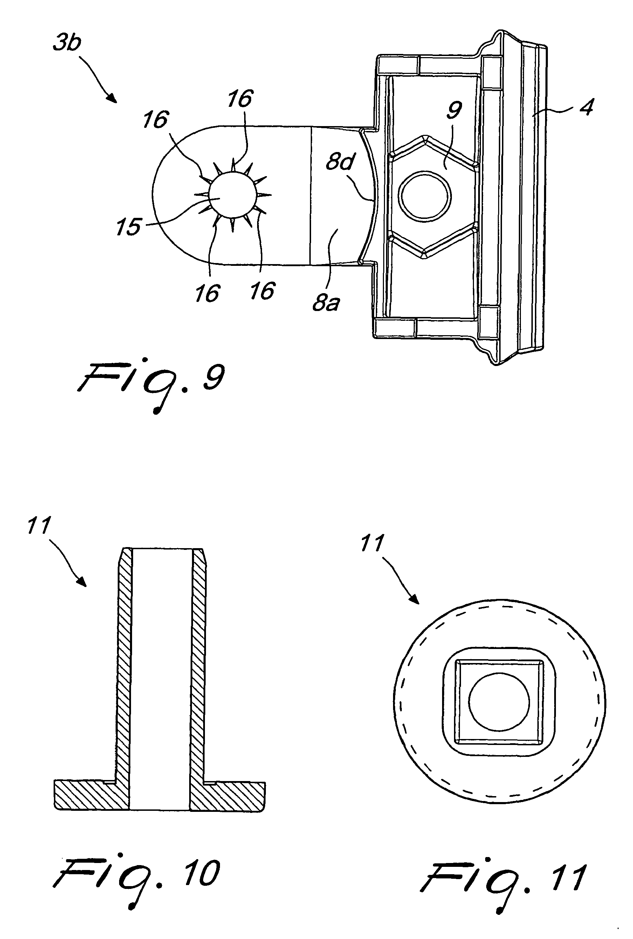

According to a possible embodiment of relevant practical interest, the kit 1 comprises at least one expansion plug 11 (illustrated in Figures 10, 11 ), whose transverse cross-section is complementary to that of the duct 6, so as to allow first its insertion in the duct 6 and then its stable anchoring to the bar 2A, 2B after the screwing of a threaded element inside the plug 11.

More precisely, according to the preferred embodiment, the threaded element is an anchoring screw, which can be inserted in the plug 11 until it optionally protrudes from it, on the opposite side, with its head.

A square nut is then screwed onto such anchoring screw from the opposite side with respect to the head, so that the plug 11 is interposed between the square nut itself and the head.

The assembly composed of the plug 11, the anchoring screw and the square nut can thus be inserted in the duct 6; it is thus sufficient to tighten the square nut to cause its movement toward the anchoring screw head, with consequent packing and deformation of the plug 11 (which is preferably made of a polyamide or the like). Since the cross-section of the plug 11 (which is substantially square) is appropriately sized (for example by having dimensions a few millimeters smaller than those of the duct 6, which is also substantially square), by means of the deformation of the plug 11 it is possible to obtain an interference mating (with subsequent stable anchoring) between the latter and the duct 6.

Moreover (as shown in Figure 2), the duct 6, having a substantially square transverse cross-section, has, at each one of its edges, respective receptacles 12 with a preferably circular cross-section, which extend longitudinally even over the entire length of the bar 2A, 2B and of the duct 6. The receptacles 12 can receive additional components of various kinds, for example other self-tapping bodies or threaded bodies (thanks to a female thread suitably provided inside the receptacles 12), and this makes it possible to anchor to the bar 2A, 2B various accessories, for which use of the plug 11 is not provided.

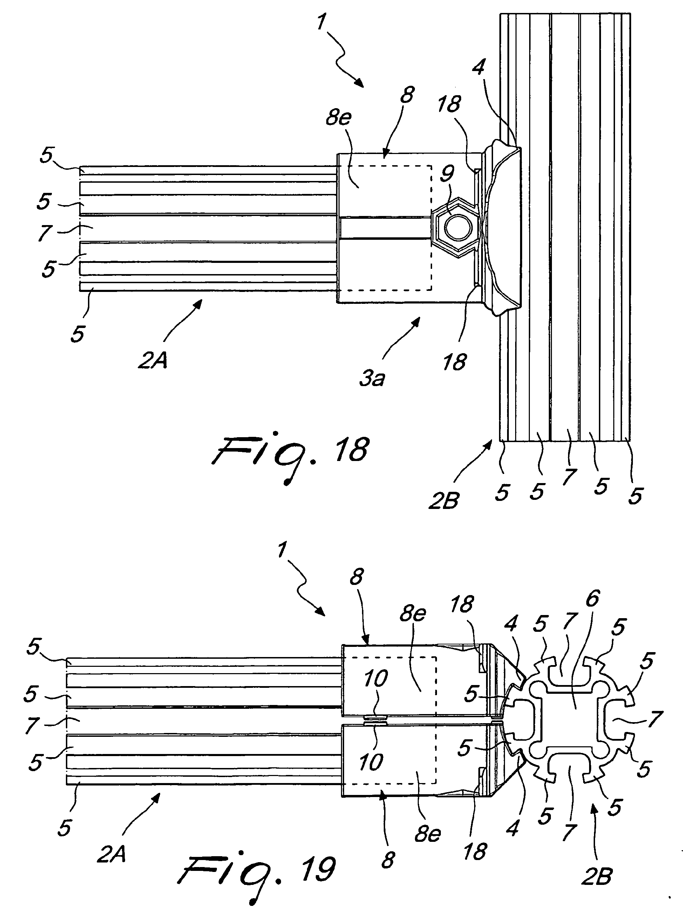

According to a first embodiment of the connector, specifically designated by 3a in this embodiment and illustrated in Figures 3, 4, 5, 18 and 19, each one of the shells 8 has a substantially semicylindrical shape. In this manner, the pair of shells 8 that are arranged close to each other and facing each other forms a substantially cylindrical seat 8b for the end portion of the first bar 2A. The bar 2A is thus locked by the shells 8 on a plane (as can be seen from Figure 18) that is at right angles to the longitudinal axis of the second bar 2B, which is clamped by the jaws 4.

Advantageously, in this embodiment each shell 8 has a protrusion 13 with a substantially parallelepipedal shape that extends from its inner wall 8a: if the first bar 2A is subjected to a transverse stress (that is, a stress directed along a direction at right angles to its longitudinal axis and potentially capable of causing an oscillation thereof), the end portion of the first bar 2A abuts against the respective protrusion 13. The thrust transmitted by the transverse stress is thus discharged on the plane of the protrusion 13, limiting, or preventing, the possibility that such thrust might be transmitted to the shells 8, promoting mutual oscillating motions and/or their separation, other than in known connectors, in which the thrust is discharged on inclined or curved surfaces of the connectors, promoting an unwanted wedge effect.

Moreover, the presence of the protrusion 13 constitutes a reference for the correct angular orientation of the first bar 2A during its insertion in the seat 8b.

Conveniently, as can be seen in Figure 5 in particular, each shell 8 has, along the lateral faces of the protrusion 13 (which is shaped like a parallelepiped), a plurality of teeth 14 (for example six, as in Figure 5): when the connector 3a locks the end portion of the first bar 2A, each tooth 14 penetrates into the end portion of the first bar 2A, strengthening the coupling and thus preventing the disengagement.

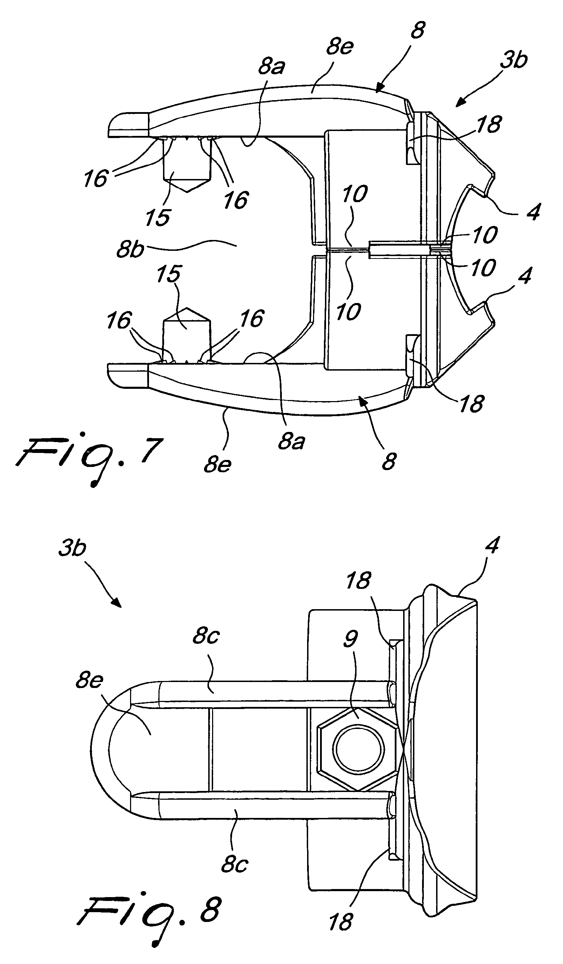

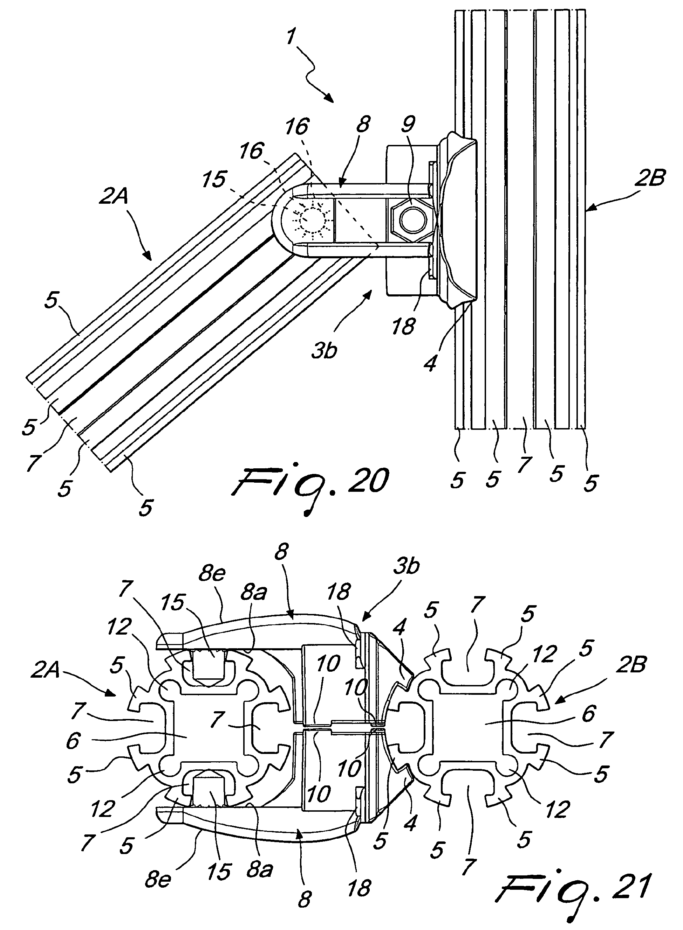

According to a different embodiment, the connector, specifically designated in this embodiment by 3b and illustrated in Figures 6, 7, 8, 9, 20 and 21, comprises a pivot 15, which extends along a substantially perpendicular direction from the inner wall 8a of each one of its shells 8: the end portion of the first bar 2A can thus be articulated to the connector 3b about the pivots 15, and this makes it possible to associate the first bar 2A with the second bar 2B on a plurality of planes which are variously inclined with respect to the longitudinal axis of such bar.

It is in fact evident that the locking of the two shells 8 creates the partial penetration, by the top ends of the pivots 15, of one of the slots 7 of the first bar 2A: the user can thus rotate the first bar 2A about the axis of the pivot 15, thus providing couplings with the second bar 2B according to inclinations at will (up to couplings in which the first bar 2A and the second bar 2B are substantially parallel).

By way of example, it is noted that the possibility of rotating the first bar 2A at will makes it possible to use it positively as a reinforcement beam inside a structure (of the lattice-like type with square meshes) provided by means of additional bars 2A, 2B.

After the first bar 2A has been arranged in the desired position, a further locking of the shells 8 (optionally provided with external reinforcement ribs 8c) makes the inner walls 8a of the latter rest against the end portion of the first bar 2A, contributing to keep it stably in position. For this purpose, it is useful to note that there is the possibility of providing on the inner wall 8a of the shell 8 (proximate to the jaws 4) contrast surfaces 8d which are conveniently shaped (for example with a concave curvilinear profile) and on which the end portion of the first bar 2A can abut so as to facilitate the locking of the latter.

Advantageously, each shell 8 of the connector 3b has a plurality of teeth 16, which are distributed radially, along its inner wall 8a, around the base of the pivot 15: like the teeth 14 described in the previous pages, when the end portion of the first bar 2A is locked by the connector 3b, while the pivot 15 penetrates the bottom of the slots 7, each one of the teeth 16 penetrates into the crests 5 so as to avoid the disengagement of the first bar 2A.

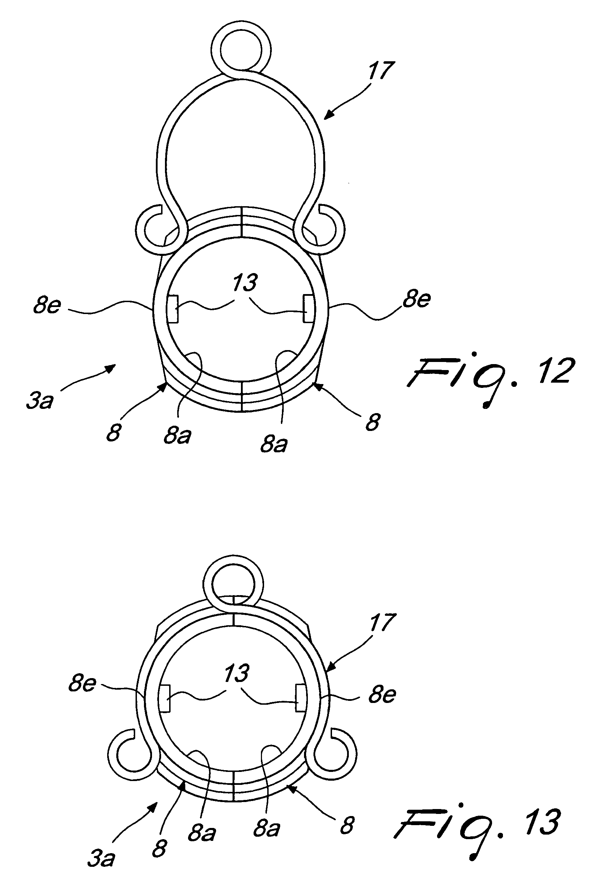

Whatever the embodiment of the connector 3a, 3b for facilitating the operations for assembly of the structure to be provided by the combination of bars 2A, 2B and connectors 3a, 3b, the kit 1 according to the invention comprises an assembly tool, constituted substantially by an elastically deformable clip 17 having an annular shape that is complementary to the shape of the connector 3a, 3b. The selected shape allows the clip 17 to wrap around the shells 8 (as shown in Figures 12 and 13) when they are arranged in the configuration for locking the first bar 2A. More precisely, during assembly, during the screwing of the shells 8 necessary to lock the first bar 2A, the elastic reaction of the clip 17, which abuts against an abutment edge 18 provided along the external wall 8e of the shells 8, keeps the shells 8 in position, i.e., in a mutually facing configuration, preventing the disengagement of one of them.

Once locking has occurred, it is easy to force the disengagement of the tool, by overcoming its elastic reaction, in order to have it then available in case of a subsequent coupling of another connector 3a, 3b with a bar 2A, 2B.

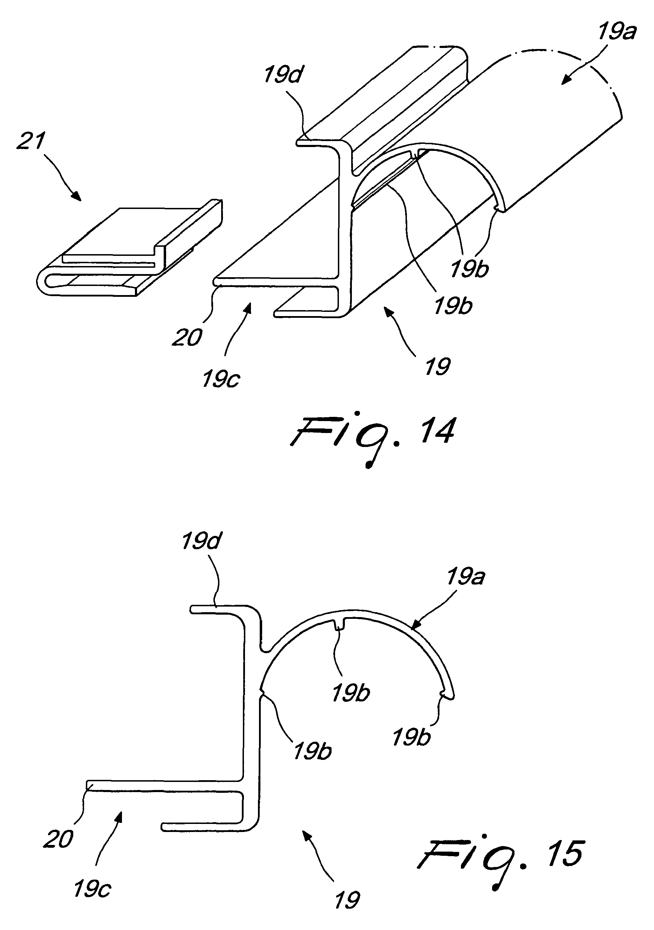

Conveniently, the modular kit 1 according to the invention can comprise a profile 19 (illustrated in two different embodiments in Figures 14, 15, 16, 17) that has a first part 19a with a substantially semicircular shape, capable therefore of providing a mated coupling, by gravity, with the bar 2A, 2B, when the latter is arranged along a substantially horizontal plane. Moreover, along the inner surface of the first part 19a, designed to make contact with the bar 2A, 2B, there can be protrusions 19b of different shapes and dimensions, which can be inserted removably in the slots 7 so as to strengthen the provided coupling.

A second part 19c of the profile 19 is associated with the first part 19a and is substantially L-shaped so as to form a substantially horizontal resting frame 20 for further accessories, of the type of rollers, shelves, racks and the like.

More particularly, according to a possible application of the profile 19, the kit 1 can comprise grip combs 21, even of a commercial type, capable of wrapping stably around the frame 20 and constitute in turn supports for roller guides (for example also of the commercial type).

By way of non-limiting example of the application of the invention, two embodiments of the profile 19 are proposed in the accompanying figures.

In the first embodiment (shown in Figures 14 and 15), the second part 19c has, on the side with respect to the frame 20, a protruding tab 19d, adapted to protect the ends of the roller guides from any dents.

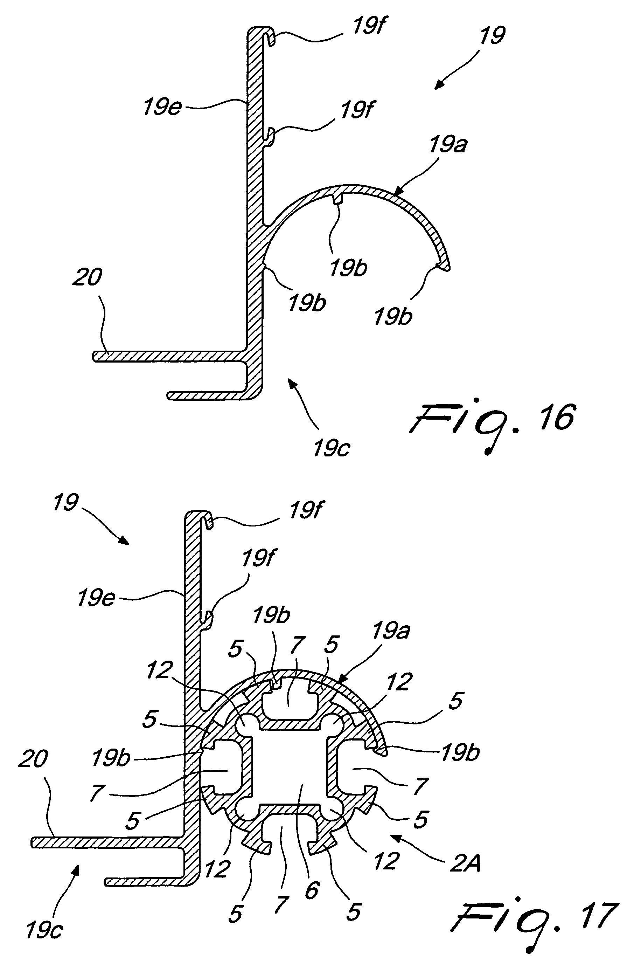

In the second embodiment, shown in Figures 16 and 17, the second part 19c has an extension 19e (again on the side opposite to the frame 20) capable of acting as a seat for labels, by means of adapted retention elements 19f.

Usefully, it is thus possible to provide storage units in which the profile 19 provided with the tab 19d is preferably used to couple the guide to the bar 2A, 2B on the side loaded with the products to be moved by means of the rollers, in order to protect the initial part of the guides.

At the same time, the profile 19. provided with the extension 19e is preferably used to couple the roller guide with the bar 2A, 2B arranged on the discharge side, in order to allow the application of labels for identifying the products arranged on the guides, using moreover the extension 19e to stop the moving loads.

It is useful to note that the resting frame 20 extends along the entire axial length of the bar 2A, 2B and thus it is possible to fix the combs 21 as well as the roller guides in any point of the frame 20, thus easily achieving storage units that are low in cost and esthetically pleasant, while maintaining maximum flexibility and total freedom of choice in the combination and sizing of the structure to be provided.

The use of the modular kit according to the invention is as follows.

In view of the need to provide carts, workstations, storage units and similar structures to order (usually with the purpose of optimizing the steps of work of a production operator and/or of satisfying the requirements of reduction of waste in the production/logistics field), the kit 1 according to the invention offers an extremely small number of elements (even only two or three), which freely combined with each other make it possible to satisfy a plurality of requirements and to manufacture any designed structure in a practical and easy manner.

In greater detail, by means of the combination of bars 2A, 2B and connectors 3a, 3b it is possible to provide frameworks (of a lattice-like type) of any shape and size, utilizing the many functionalities of the elements cited above, introduced on the previous pages.

First of all, in fact, the choice to resort to bars 2A, 2B provided with eight crests 5 arranged along eight radial directions (staggered by 45° with respect to the next) makes it possible respectively to anchor, by means of the connector 3a, 3b that clamps two consecutive crests 5, a first bar 2A to a second bar 2B along eight different radial directions.

Moreover, the choice to provide crests 5 that extend along the entire length of the respective bar 2A, 2B allows provision of the coupling with another bar 2B, 2A at any point of the longitudinal extension of the first one.

Obviously, it is possible to anchor to a same bar 2B even two or more connectors 3a, 3b along different radial directions and on the same longitudinal level, in order to provide frameworks and structures having a more complex shape.

It is moreover possible to fix to the frameworks thus obtained, for example by using, as mentioned, the slots 7, accessories, shelves, surfaces according to specific requirements, thus obtaining the desired structure.

Moreover, the choice to provide ducts 6 (and receptacles 12) inside the bars 2A, 2B makes it possible to secure to the latter (optionally by means of an expansion plug 11) other objects and accessories.

For example, a respective resting foot or a free wheel may be screwed into the duct 6 of one or more bars 2A, 2B arranged vertically, by means of the plug 11, to allow the subsequent movement of the resulting structure.

As observed in the preceding description, it is possible to find in the kit 1 various types of connector 3a, 3b, which in any case are capable, thanks to the jaws 4, of clamping a second bar 2B, while with the shells 8 they lock the first bar 2A.

More precisely, the connector designated in the accompanying figures by the reference numeral 3a makes it possible to couple to the second bar 2B a first bar 2A that lies on a plane at right angles to the longitudinal axis of the second bar 2B; as an alternative, by means of the connector 3b it is possible to provide couplings in which the first bar 2A is rotated by a selected angle with respect to the second bar 2B.

In any case, there is the possibility of sizing the width and length of the jaws 4 so as to distribute the locking force over a sufficiently wide region, thus preventing any deformation of the shells 8 as a consequence of the coupling of the connector 3a, 3b to the bars 2A, 2B.

As already noted, the use of profiles 19 makes it possible to anchor roller guides to the bars 2A, 2B, for example in order to provide structures of the gravity storage unit type.

Moreover, the possibility of resorting to a tool, such as the clip 17, facilitates the operations for construction and assembly of the structure by keeping in position the shells 8 while they are locked, with the fixing screw, around the first bar 2A, an activity which otherwise the assembly worker would have had to perform using both hands, with obvious inconvenience.

Finally, it is specified that there is the possibility of marketing kits 1 (all within the protective scope claimed herewith) in which all or some of the elements introduced in the preceding description can be found in any desired number.

For example, the kit 1 might be composed of a single bar 2A, 2B (of a length chosen at will, which can be optionally cut transversely to obtain one or more shorter bars 2A, 2B) or of various bars 2A, 2B; moreover, the kit 1 might be provided with just one connector 3a, 3b or with a connector 3a and a connector 3b or again various connectors 3a, 3b. Obviously, it is possible to add to these elements further accessories, such as the ones already proposed (the assembly tool and the profile 19, and optionally also one or more combs 21 and one or more roller guides).

In practice it has been found that the modular kit according to the invention fully achieves the intended aim, since the choice to resort to a profiled bar provided with a hollow duct inside it and with at least eight contoured longitudinal crests (which delimit at least four slots), arranged at uniform distances from each other along its lateral surface and such as to constitute abutment shoulders for the jaws of respective connectors capable of clamping it, makes it possible to easily provide a plurality of carts, workstations, storage units and the like in a customized manner.

In the illustrated exemplary embodiments, individual characteristics, given in relation to specific examples, may actually be interchanged with other different characteristics that exist in other exemplary embodiments.

The invention thus conceived is susceptible of numerous modifications and variations, all of which are within the scope of the appended claims.

Thus, for example, according to a possible embodiment, the bars 2A, 2B and the profile 19 are made of aluminum, while the connectors 3a, 3b are obtained by die-casting and made of an alloy based on zinc, such as aluminum-zinc-magnesium.

All the details may further be replaced with other technically equivalent elements, as long as they are within the scope of the appended claims.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A modular kit for the customized manufacture of structures, such as carts, storage units and workstations of various type, comprising at least one first (2A) and one second (2B) profiled bars having each at least eight contoured longitudinal crests (5) which are substantially arranged at equal distances from each other along the lateral surface of each one of said bars (2A, 2B), and at least one connector (3a, 3b) for mutually coupling said bars (2A, 2B), said at least one connector (3a, 3b) being substantially constituted by two shells (8), an end portion of each one of said shells (8) having a shape that is complementary to said sides of said crests (5), so as to form respective jaws (4) whose shape is complementary with respect to said crests (5) that constitute abutment shoulders for said jaws (4) for the clamping of the second bar (2B) by said connector (3A, 3B), said first bar (2A) and said second bar (2B) being mutually associable, by means of said connector (3a, 3b), along eight different radial directions, said bar (2A, 2B) having moreover a hollow duct (6), which is arranged coaxially inside it, and at least four longitudinal slots (7), arranged at equal distances from each other along its lateral surface and delimited by respective pairs of said crests (5), each one of said slots (7) forming a seat for coupling to shelves, panels, accessories and tools of various types to be anchored to said bar (2A, 2B), **characterized in that** said shells (8) face each other so as to delimit, with respective inner walls (8a) thereof, an inner seat (8b) for accommodating an end portion of said first bar (2A), and comprise each, protruding from the respective inner wall (8a): either a protrusion (13) with a substantially parallelepipedal shape, said end portion of said first bar (2A) abutting against each one of the protrusions (13) of said shells (8) after a possible stress occurring transversely to the axis of one of said first bar (2A) and said second bar (2B), so as to limit mutual oscillating motions, said shells (8) having each a substantially semicylindrical shape and forming therebetween a substantially cylindrical seat (8b) for said end portion of said first bar (2A) locked therebetween on a plane at right angles to the longitudinal axis of said second bar (2B), which is clamped by said jaws (4); or a pivot (15), which extends along a substantially perpendicular direction from said respective inner wall (8a), said end portion of said first bar (2A) being articulately connectable to said shells (8) about said pivots (15), said first bar (2A) being associable with said second bar (2B) on a plurality of planes which are variously inclined with respect to the longitudinal axis of the latter.

2. The modular kit according to claim 1, **characterized in that** each one of said shells (8) has a recess (9) for the insertion of a respective locking nut suitable to receive a corresponding fixing screw, the screwing of said fixing screw causing the locking of said shells (8) around said first bar (2A), and the clamping of said second bar (2B) by said jaws (4).

3. The modular kit according to one or more of the preceding claims, **characterized in that** it comprises pads (10) that protrude from the lateral edges of said shells (8), any excessive locking force being discharged onto said pads (10) upon the locking of said end portion of said first bar (2A) by said connector (3a, 3b).

4. The modular kit according to one or more of the preceding claims, **characterized in that** it comprises at least one expansion plug (11), whose transverse cross-section is complementary to that of said duct (6), for its insertion and consequent stable anchoring in said duct (6) after the screwing, inside said plug (11), of a threaded element of various types.

5. The modular kit according to one or more of the preceding claims, **characterized in that** said duct (6), having a substantially square transverse cross-section, has at each one of its corners respective receptacles (12) with a preferably circular cross-section for receiving additional components, which may also be threaded, of various kinds.

6. The modular kit according to any of the preceding claims, **characterized in that** each one of said shells (8) has, along the lateral faces of said parallelepipedal protrusion (13), a plurality of teeth (14), each one of said teeth (14), upon the locking of said end portion of said first bar (2A) by said connector (3a), penetrating into said end portion to prevent its disengagement.

7. The modular kit according to any of the claims 1-5, **characterized in that** each one of said shells (8) has a plurality of small teeth (16) distributed radially, along said inner wall (8a), around the base of said pivot (15), each one of said small teeth (16) penetrating into said crests (5) to prevent disengagement thereof when said end portion of said first bar (2A) is locked by said connector (3b).

8. The modular kit according to one or more of the preceding claims, **characterized in that** it comprises an assembly tool, substantially constituted by an elastically deformable clip (17), having an annular shape that is complementary to the one of said connector (3a, 3b), so as to wrap around said shells (8) in the configuration for locking said first bar (2A), the elastic reaction of said clip (17), which abuts against an abutment edge (18) provided along the external wall (8e) of said shells (8), keeping said shells (8) in a mutually facing configuration during the mutual locking of said first bar (2A) and said second bar (2B).

9. The modular kit according to one or more of the preceding claims, **characterized in that** it comprises a profile (19) that has a first part (19a) with a substantially semicircular shape, for mated coupling by gravity with said bar (2A, 2B), arranged along a substantially horizontal plane, a second part (19c) of said profile (19) being associated with said first part (19a), being substantially L-like shaped and forming a resting frame (20) for additional accessories, such as rollers, shelves, racks and the like.

10. The modular kit according to any of the preceding claims, **characterized in that** each said slot (7) is provided with a flat bottom.

## Patentansprüche

1. Ein modulares Kit für die maßgeschneiderte Herstellung von Wagen, Arbeitsplätzen, Lagereinheiten und ähnlichen Strukturen, das zumindest einen ersten (2A) und einen zweiten (2B) profilierten Holm umfasst, der jeweils zumindest acht geformte Scheitelpunkte (5) aufweist, die im Wesentlichen im gleichen Abstand voneinander entlang der seitlichen Flächen der einzelnen besagten Holme (2A, 2B) angebracht sind, sowie zumindest einen Verbinder (3a, 3b) für die wechselseitige Verbindung der besagten Holme (2A, 2B), wobei zumindest einen Verbinder (3a, 3b) im Wesentlichen aus zwei Verbindungshälften (8) besteht, und wobei die Endteile der besagten Verbindungshälften (8) eine Form aufweisen, die komplementär zu den besagten Seiten der besagten Scheitelpunkte (5) ist, um jeweils Spannbacken (4) zu bilden, deren Form komplementär zu den besagten Scheitelpunkten (5) ist, die Stützschultem für die besagten Spannbacken (4) bilden für das Einklemmen des zweiten Holms (2B) durch den besagten Verbinder (3A, 3B), wobei der besagte erste Holm (2A) und der besagte zweite Holm (2B) wechselseitig verbunden werden können durch den besagten Verbinder (3a, 3b), entlang von acht verschiedenen radialen Richtungen; besagter Holm (2A, 2B) weist außerdem einen Hohlkanal (6) auf, der sich koaxial im Inneren befindet, sowie zumindest vier Schlitze (7) in Längsrichtung, angeordnet im gleichen Abstand voneinander entlang der Seitenfläche und begrenzt jeweils durch Paare der besagten Scheitelpunkte (5), wobei einer der besagten Schlitze (7) einen Sitz für die Verbindung von Verbindungshälften, Paneelen, Zubehörteilen und Werkzeugen unterschiedlichen Typs bildet, die am besagten Holm (2A, 2B) verankert werden müssen, **gekennzeichnet dadurch, dass** die besagten Verbindungshälften (8) einander gegenüberliegen, um jeweils mit ihren Innenwänden (8a) einen inneren Sitz (8b) zu begrenzen für die Aufnahme eines Endteils des besagten ersten Holms (2A), und jeweils umfassen, vorstehend aus der jeweiligen Innenwand (8a): entweder einen Vorsprung (13) mit im Wesentlichen parallelepipedaler Form, wobei das besagte Endteil des besagten ersten Holm (2A) auf alle Vorsprünge (13) der besagten Verbindungshälften (8) ruht nach möglicher Belastung quer zur Achse des besagten ersten Holms (2A) und des besagten zweiten Holm (2B), um so wechselseitige Oszillationsbewegungen zu begrenzen, wobei die besagten Verbindungshälften (8) eine im Wesentlichen halbzylindrische Form aufweisen und zwischen sich einen im Wesentlichen zylindrischen Sitz (8b) bilden für das besagte Endteil des besagten ersten Holms (2A), der dazwischen auf einer Ebene im rechten Winkel zur Längsachse des besagten zweiten Holms (2B) blockiert wird, der von den besagten Spannbacken (4) eingeklemmt wird; oder ein Drehpunkt (15), der sich in einer im Wesentlichen senkrechten Richtung von der gesagten jeweiligen Innenwand (8a) erstreckt, wobei das besagte Endteil des besagten ersten Holms (2A) im Gelenk verbunden werden kann mit den besagten Verbindungshälften (8) über die besagten Drehpunkte (15), wobei der besagte erste Holm (2A) mit dem besagten zweiten Holm (2B) in einer Vielzahl von Ebenen verbunden werden kann, die unterschiedliche Neigungen zur Längsachse der letzteren aufweisen.

2. Das modulare Kit gemäß Anspruch 1, **gekennzeichnet durch** die Tatsache, dass jede der besagten Verbindungshälten (8) eine Aussparung (9) für das Einsetzen einer entsprechenden Sperrmutter aufweist, die für die Aufnahme einer entsprechenden Befestigungsschraube geeignet ist, wobei das Einschrauben der besagten Befestigungsschraube die Sperrung der besagten Verbindungshälften (8) um den besagten ersten Holm (2A) bewirkt, sowie das Einspannen des besagten zweiten Holms (2B) **durch** die besagten Backen (4).

3. Das modulare Kit gemäß einem oder mehreren der vorausgehenden Ansprüche, **gekennzeichnet durch** die Tatsache, dass der Polster (10) aufweist, die aus den seitlichen Kanten der besagten Verbindungshälften (8) vorstehen, wobei jede überschüssige Sperrkraft auf die besagten Polster (10) abgeleitet wird beim Sperren des besagten Endteils des besagten ersten Holm (2A) **durch** den besagten Verbinder (3a, 3b).

4. Das modulare Kit gemäß einem oder mehreren der vorausgehenden Ansprüche, **gekennzeichnet durch** die Tatsache, dass er zumindest einen Erweiterungsanschluss (11) aufweist, dessen Querschnitt komplementär zu besagtem Kanal (6) ist, für das Einsetzen und die nachfolgende stabile Verankerung von Elementen mit Gewinden von verschiedenem Typ in dem besagten Kanal (6) nach dem Einschrauben in den besagten Anschluss (11).

5. Das modulare Kit gemäß einem oder mehreren der vorausgehenden Ansprüche, **gekennzeichnet durch** die Tatsache, dass der besagte Kanal (6), der einen im Wesentlichen quadratischen Querschnitt aufweist, an allen Ecken entsprechende Anschlüsse (12) mit vorzugsweise rundem Querschnitt für die Aufnahme von zusätzlichen Komponenten verschiedener Art aufweist, die auch Gewinde aufweisen können.

6. Das modulare Kit gemäß einem oder mehreren der vorausgehenden Ansprüche, **gekennzeichnet durch** die Tatsache, dass alle besagten Verbindungshälften (8) entlang der Seiten des besagten parallelepipedalen Vorsprungs (13) eine Vielzahl von Zähnen (14) aufweist, wobei jeder der besagten Zähne (14) nach dem Sperren des Endteils des besagten ersten Homs (2A) **durch** den besagten Verbinder (3a) in das besagte Endteil eindringt, um die Lösung desselben zu verhindern.

7. Das modulare Kit gemäß einen beliebigen der Ansprüche 1-5, **gekennzeichnet durch** die Tatsache, dass ein jedes der besagten Verbindungshälften (8) eine Vielzahl von kleinen Zähnen (16) aufweist, die radial angeordnet sind entlang der besagten Innenwand (8a) um die Basis der besagten Achse (15), wobei ein jeder der besagten kleinen Zähne (16) in die besagten Scheitelpunkt (5) eindringt, um das Lösen zu verhindern, wenn das besagte Endteil des besagten ersten Holms (2A) **durch** den besagten Verbinder (3b) gesperrt wird.

8. Das modulare Kit gemäß einem oder mehreren der vorausgehenden Ansprüche, **gekennzeichnet durch** die Tatsache, dass er ein Montagewerkzeug aufweist, im Wesentlichen bestehend aus einer elastisch verformbaren Klemme (17) mit Ringform, die komplementär zu einer der besagten Verbinder (3a, 3b) ist, um so die besagten Verbindungshälften (8) zu umgeben, um den besagten ersten Holm (2A) zu sperren, wobei die elastische Wirkung der besagten Klemme (17), die gegen eine Stützkante (18) entlang der äußeren Wand (8e) der besagten Verbindungshälften (8) lehnt, die besagten Verbindungshälften (8) in wechselseitigem Kontakt hält, während des Sperrens des besagten ersten Holms (2A) und des besagten zweiten Holms (2B).

9. Das modulare Kit gemäß einem oder mehreren der vorausgehenden Ansprüche, **gekennzeichnet durch** die Tatsache, dass er ein Profil (19) aufweist, das einen ersten Teil (19a) mit im Wesentlichen halbrunder Form für die Kupplung mit dem besagten Holm (2A, 2B) **durch** Schwerkraft aufweist, angeordnet entlang einer im Wesentlichen horizontalen Ebene, sowie einen zweiten Teil (19c) des besagten Profils (19), der mit dem besagten ersten Teil (19a) verbunden ist, im Wesentlichen eine L-Form aufweist und einen Auflagerahmen (20) für weitere Zubehörvorrichtungen wie Rollen, Platten, Racks usw. bildet.

10. Das modulare Kit gemäß einem oder mehreren der vorausgehenden Ansprüche, **gekennzeichnet durch** die Tatsache, dass jeder der besagten Schlitze (7) einen flachen Boden aufweist.

## Revendications

1. A kit modulaire pour la fabrication sur mesure de structures, telles que des chariots, unités de stockage et stations de travail de différents types, comprenant au moins une première (2A) et deuxième (2B) barre profilée ayant au moins huit crêtes longitudinales profilées (5) chacune, ces barres sont essentiellement disposées à la même distance l'une de l'autre tout au long de leur surface latérale (2A, 2B), et avec au moins un connecteur (3a, 3b) pour les accoupler (2A et 2B); ce connecteur (3a, 3b) comprend essentiellement deux coquilles (8), une partie de l'extrémité de chacune de ces coquilles (8) est formée pour compléter les côtés des crêtes en question (5) pour former des mâchoires respectives (4) et formées pour compléter les crêtes (5) qui constituent des épaulements de butée pour ces mâchoires (4) utilisés pour serrer la deuxième barre (2B) par ledit connecteur (3A, 3B), ladite première barre et ladite deuxième barre (2B) étant mutuellement assemblées par l'intermédiaire de ce connecteur (3a, 3b) au long de huit directions radiales différentes; ladite barre (2A, 2B) ayant en outre un conduit creux (6), qui est disposé coaxialement à l'intérieur de celle-ci, et au moins quatre rainures longitudinales (7), équidistantes les unes des autres au long de sa surface latérale et délimitées par les respectives paires de crêtes (5), chacune de ces rainures (7) forme un support pour accrocher des étagères, panneaux, accessoires et équipement de différent type à ces barres (2A, 2B), **caractérisées par le fait que** ces coquilles (8) sont face à face pour délimiter, avec les parois intérieures respectives (8a) de ces derniers, un support intérieur (8b) destiné à loger une partie de l'extrémité de la première barre (2A) et comprenant chacune, en extension de la paroi intérieure respective (8a): soit une extension (13) de forme sensiblement parallélépipédique, avec la partie de l'extrémité de la première barre (2A) en butée contre chacune des extensions (13) de ces coquilles (8) suite à une possible pression transversale par rapport à l'axe de la première (2A) et de la seconde (2B) barre, de façon à limiter les mouvements mutuels d'oscillation; ces coquilles (8) ayant essentiellement une forme semi-cylindrique et formant donc substantiellement entre elles, un support cylindrique (8b), pour la partie de l'extrémité de cette première barre (2A), qui est bloquée sur un plan perpendiculaire à l'axe longitudinal de la deuxième barre (2B), qui est maintenue par ces mâchoires (4); soit un pivot (15) qui s'étend perpendiculairement à la paroi intérieure respective (8a), cette partie de l'extrémité de la première barre (2A) étant connectable par articulation aux dites coquilles (8), à propos de ces pivots (15), cette première barre (2A) pouvant être assemblée à la deuxième barre (2B) sur plusieurs plans ayant des inclinaisons différentes par rapport à l'axe longitudinal de celle-ci.

2. Selon le commentaire fourni, **le kit modulaire est caractérisé par le fait que** chacune de ces coquilles (8) présente une cavité (9) pour introduire un écrou de verrouillage respectif et adapté pour recevoir une vis de fixation correspondante, le vissage de ladite vis de fixation provoque le verrouillage de ces coquilles (8) autour de ladite première barre (2A) et le serrage **de ladite seconde barre (2B) par lesdites mâchoires (4).**

3. Selon un ou plusieurs commentaires précédents, le kit modulaire est **caractérisé par le fait qu'**il comprend des coussinets (10) qui dépassent des bords latéraux des coquilles en question (8), de façon à ce que les forces de serrage excessives soient absorbées par ces coussinets (10) lors du blocage de ladite partie de l'extrémité de ladite première barre **(2A) par ledit connecteur (3a, 3b).**

4. Selon un ou plusieurs commentaires précédents, le **kit modulaire** est **caractérisé par le fait qu'**il comprend au moins un **bouchon d'expansion (11), dont la section transversale est complémentaire à celle du dit conduit (6) pour qu'il puisse y être insérer et est par conséquent un ancrage stable dans ledit conduit (6) après avoir été vissé, à l'intérieur dudit bouchon (11), avec un élément fileté de divers types.**

5. Selon un ou plusieurs commentaires précédents, le kit modulaire est **caractérisé par le fait que** ledit conduit (6), ayant une section transversale sensiblement carrée, présente à chacun de ses coins respectifs (12) une section transversale de préférence circulaire pour recevoir des composants supplémentaires de divers types qui peuvent également être filetés.

6. Selon un ou plusieurs commentaires précédents, le kit modulaire est **caractérisé par le fait que** chacune de ces coquilles (8) présente, le long des faces latérales de ladite extension parallélépipédique (13), plusieurs dents (14), **chacune de ces dents (14), lors du serrage de ladite partie de l'extrémité de la première barre (2A) par ledit connecteur (3a), pénètre dans ladite partie d'extrémité pour l'empêcher de se désengager.**

7. Selon les commentaires 1-5, **le kit modulaire est caractérisé par le fait que chacune de ces coquilles (8) présente beaucoup de petites dents (16) réparties radialement le long de ladite paroi intérieure (8a) autour de la base dudit pivot (15); chacune de ces petites dents (16) pénètre dans lesdites crêtes (5) pour l'empêcher de se désengager de celles-ci lorsque ladite partie de l'extrémité de la première barre (2A) est bloquée par le connecteur (3b).**

8. Selon un ou plusieurs commentaires précédents, **le kit modulaire est caractérisé par le fait qu'il comprend un outil de montage, essentiellement constitué par une pince déformable élastiquement (17) ayant une forme annulaire qui est complémentaire au dit connecteur (3a, 3b) pour s'enrouler autour des coquilles (8) dans la configuration de serrage de ladite première barre (2A); la réaction élastique de cette pince (17), qui est en butée contre un bord de butée (18) prévu au long de la paroi externe (8e) de ces coquilles (8) maintenant ces coquilles (8) sont dans une configuration de face à face lors du serrage de ladite première (2A) et deuxième (2B) barre.**

9. Selon un ou plusieurs commentaires précédents, **le kit modulaire est caractérisé par le fait qu'il comprend un profilé (19) qui a une première partie (19a) ayant une forme sensiblement semi-circulaire pour accoupler lesdites barres (2A, 2B) par force de gravité et qui est disposé le long d'un plan sensiblement horizontal; une deuxième partie (19c) de ce profilé (19) étant associée à ladite première partie (19a), étant sensiblement en forme de L et formant le restant du cadre d'appui (20) pour des accessoires supplémentaires tels que des rouleaux, tablettes, étagères et autres éléments similaires.**

10. Selon un ou plusieurs commentaires précédents, **le kit modulaire est caractérisé par le fait que chaque rainure (7) est munie d'un fond plat**
